# EUROPEAN PATENT APPLICATION

(11) **EP 3 290 864 A1**
(43) Date of publication of application: **07.03.2018**
(21) Application number: 16465529.2
(22) Date of filing: 30.08.2016
(51) Int. Cl.: G01C 21/28

(54) **DRIVER ASSISTANCE SYSTEM FOR DETERMINING A POSITION OF A VEHICLE**

(71) Applicant: Continental Automotive GmbH, 30165 Hannover (DE)
(72) Inventor: Nicosevici, Tudor, 300328 Timisoara (RO); Son, Andrei, 300588 Timisoara (RO)
(74) Representative: Reuter, Andreas

(57) **Abstract**

The invention relates to a driver assistance system (10) for determining a position of a vehicle. The driver assistance system (10) comprises a processing unit (33) and a first positioning system (11) for providing first information (50) about the position of the vehicle (30). The driver assistance system (10) further comprises a second positioning system (12) for providing second, visual information (35) about the position of the vehicle (30) . The second positioning system (12) is configured to provide the second, visual information (35) about the position of the vehicle (30) based on a comparison between image data (36) of an image (60) generated by an on-board camera (31) of the vehicle (30) and image data (41) of an image (70) stored in a database (40) . The processing unit (33) is configured for determining the position of the vehicle (30) based on the first information (50) about the position of the vehicle (30) and on the second, visual information (35) about the position of the vehicle (30).

## Description

### Field of the invention

The invention generally relates to the localization of vehicles. In particular, the invention relates to a driver assistance system for determining a position of a vehicle and to a method for determining a position of a vehicle.

### Background of the invention

Precise vehicle positioning is a crucial element in the context of robust autonomous driving. It is the cornerstone of numerous automated functions enabling lane-keeping, overtaking, speed adaption, short-term and long-term route planning, etc. For this reason, significant effort is dedicated to developing positioning systems based on global navigation satellite system (GNSS) and vehicle dynamics data. The precision of vehicle positioning systems is limited to the accuracy of the GNSS accuracy. However, this is often insufficient for autonomous driving. Furthermore, this problem becomes exacerbated when driving in areas with a low or no satellite visibility which is often the case in urban areas where buildings and other structures block the satellite signal. This is a problem because, especially in cities, the precise positioning of a vehicle is often required.

### Summary of the invention

It is an object of the present invention to provide a precise positioning of a vehicle.

This object is achieved by the subject-matter of the independent claims. Further exemplary embodiments are evident from the dependent claims and the following description.

According to a first aspect of the present invention, a driver assistance system for determining a position of a vehicle is given. The driver assistance system comprises a processing unit and a first positioning system for providing a first information about the position of the vehicle. The driver assistance system further comprises a second positioning system for providing second, visual information about the position of the vehicle. The second positioning system is configured to provide the second, visual information about the position of the vehicle based on a comparison between image data of an image generated by an on-board camera of the vehicle and image data of an image stored in a database. The processing unit is configured for determining the position of the vehicle based on the first information about the position of the vehicle and on the second, visual information about the position of the vehicle.

In this manner, it is possible to provide a precise positioning of a vehicle or to increase the precision of the positioning of the vehicle, especially in situations where the accuracy of a satellite navigation system, like for example a Global Navigation Satellite System (GNSS), is low. The accuracy of satellite navigation systems is usually low where the signal is blocked for example by means of buildings which are located around the vehicle. The inventive driver assistance system provides an improvement of the precision of the positioning of the vehicle by comparing the image data provided by the on-board camera of the vehicle with data provided by a database containing street images such as for example from street view programs. Such a street view program may for instance be Google Street View. Once a match between the current vehicle camera view and an image in the database is found, the position associated with the database image is used to improve the position estimation of the vehicle.

For example, the first positioning system provides first information about the position of the vehicle, wherein the first information about the position of the vehicle may be provided by a satellite navigation system. However, it is possible that the first positioning system can also be used if no satellite navigation system information is available. In particular, the vehicle's car navigation system may be configured for roughly estimating the position of the vehicle, for example using dead-reckoning. The visually-based positioning by means of the second, visual information will then be used to refine the vehicle position estimations. In such a case the first positioning system for providing the first information about the position of the vehicle may carry out an estimation for the current position of the vehicle such that an enhancement of the position estimation of the vehicle based on the second, visual information provided by the second positioning system can be achieved. In other words, geo-reference information is associated with the information of the images from the database in order to enhance the positioning of the vehicle.

The second positioning system, in contrast, provides the second, visual information about the position of the vehicle by a comparison between image data of the image generated by the on-board camera of the vehicle and image data of the image stored in the database. The vehicle may therefore comprise a localization module which, for example, is part of the processing unit in order to combine the information of the first positioning system and the second positioning system such that a precise information about the position of the vehicle is obtained. It is possible that the determination of the position of the vehicle based on the first information and on the second, visual information is conducted in the processing unit before the information about the position is sent to the vehicle. However, it is also possible that the first information and the second, visual information is first sent separately to the vehicle and the determination of the position, e.g. the combination of both information, is conducted in the vehicle, for example in the processing unit which may be a part of the vehicle.

The second positioning system may comprise the database as well as a server unit which may also be called backend server, wherein the server unit is adapted to prepare the images from the database such that the prepared images can be compared with images of the on-board camera of the vehicle in order to determine the position of the vehicle. Such a preparation may comprise a hashing of the images. This aspect will be described in more detail hereinafter.

It should be understood that the driver assistance system for determining the position of the vehicle is not only a part of the vehicle but also comprises other systems like for example the database, the processing unit, the first positioning system and the second positioning system. These systems are not necessarily parts of the vehicle although these systems are parts of the driver assistance system. In particular, it is possible that the processing unit, the first positioning system, the second positioning system as well as the database and even the vehicle may be locally separated from each other. It is also possible that only one or some of these systems, for example only the processing unit, are located inside the vehicle. However, these units or systems may all be parts of the driver assistance system.

According to an embodiment of the invention, the first information about the position of the vehicle is provided by a satellite navigation system and/or based on a position estimation of the vehicle (30) using dead-reckoning.

In this manner, it is possible to provide a first good localization of the vehicle which can then be combined with the second, visual information about the position of the vehicle in order to get a more precise information about the location of the vehicle. The satellite navigation system may for instance be a global navigation satellite system (GNSS) using the GPS or the Galileo system. This first information from the first positioning system, e.g. from the satellite navigation system, may be sent to the server unit which then sends a request to the database such that the database provides image data based on the first information of the first positioning system, thereby taking into account uncertainties in the current position of the vehicle. In this manner, a selection of image data from the region around the vehicle can be provided by the server unit in order to delimit the data which is provided for comparison with the image data of the on-board camera.

However, besides or alternatively to using a satellite navigation system, the first positioning system may be configured for roughly estimating the position of the vehicle. In this case, the first information about the position of the vehicle is provided based on a position estimation of the vehicle using dead-reckoning.

According to another embodiment of the invention, the comparison between the image data of the image generated by the on-board camera of the vehicle and the image data of the image stored in the database comprises a comparison between features of the image generated by the on-board camera of the vehicle and corresponding features of the image stored in the database.

In other words, only some regions of an image or some objects within an image, e.g. features, are selected or extracted from the images provided by the database and are then compared with corresponding regions or objects in the images generated by the on-board camera of the vehicle. Thus, a reduction of information and data is achieved decreasing the computational costs associated with the processing, storage and transmission of image features. Image features correspond to regions or objects of an image with high discriminative value thereby providing a representation of the image content. The image features may then be represented by feature descriptors.

Image features may be image regions, particularly locations within an image that have high distinctiveness, i.e. these image regions are easily distinguishable from other image regions. Feature descriptors are a means to describe such features, for example by extracting statistics on the image regions around the features. A feature descriptor may thus be considered as a digital fingerprint of a feature. This will be described in more detail below.

According to another embodiment of the invention, the second positioning system is configured for selecting features from the image stored in the database in order to generate a first group of image features and/or the second positioning system is further configured for selecting features from the image generated by the on-board camera of the vehicle in order to generate a second group of image features.

Therefore, only some parts of an image or only one part of the image is selected and used for the comparison. This means that the selected features from the image stored in the database, e.g. the first group of image features, may be compared to the selected features from the image generated by the on-board camera, e.g. the second group of image features. The features may be selected or extracted by means of specialized feature extraction algorithms. The comparison between the images may then be based only on the first group of image features of the image stored in the database and the second group of image features of the image generated by the on-board camera. In this manner, the computational cost associated with the processing is considerably reduced.

According to another embodiment of the invention, the second positioning system is configured for allocating first feature descriptors to the first group of image features using similarity criteria, wherein the first feature descriptors are representative for the first group of image features of the image stored in the database. In particular, one first feature descriptor is allocated to each image feature of the first group of image features. The first feature descriptor may also be called first image feature descriptor or simply first descriptor. The second positioning system is configured for allocating second feature descriptors to the second group of image features using similarity criteria, wherein the second feature descriptors are representative for the second group of image features of the image generated by the on-board camera of the vehicle. In particular, one second feature descriptor is allocated to each image feature of the second group of image features. The second feature descriptor may also be called second image feature descriptor or simply second descriptor.

Generally, a feature descriptor, as described in the present invention, may be considered as a means for uniquely representing image features of an image. Such descriptors are based on data extracted from areas around the corresponding image features.

In this manner, it is possible to compare the image data of the image stored in the database and the image data of the image generated by the on-board camera of the vehicle using visual bag of words techniques. Using the first feature descriptors and the second feature descriptors as well as a so-called visual vocabulary, a comparison between the images can be carried out in order to provide the second, visual information about the position of the vehicle.

In particular, using visual bag of words techniques comprises the provision of visual information which is obtained from raw images by extracting image features from an image. The image features correspond to regions of an image with high discriminative value providing a representation for the image content. The image features are then represented using the feature descriptors. These feature descriptors describe the corresponding regions in a compact form typically taking into account the gradient distribution within the regions. For example, binary techniques such as BRIEF or ORB provide a more compact representation decreasing the computational costs associated with the processing, storage and transmission of image features. BRIEF and ORB descriptors provide a computational efficient way of characterizing image features. They use key points around each feature. Each element in the binary descriptor is calculated by comparing the image intensity between pairs of key points. After the allocation of the feature descriptors to the image features, the feature descriptors are grouped such that a generalized feature descriptor, e.g. a visual word is obtained. This aspect will be described in more detail in the following.

Visual bag of words techniques is generally described by three stages:

In a first stage, which is a training stage, image features are extracted from a series of training images. Visually similar image features are then grouped together obtaining a so-called visually vocabulary which represents a set of generalized image features called visual words. These visual words are identified as generalized feature descriptors. The feature grouping is carried out using clustering techniques such as K-means and agglomeration techniques. K-means clustering is an iterative data partitioning algorithm that assigns each data sample to one of the clusters, wherein k is a user-defined number of clusters. The clusters are characterized by their centroid which is identified as the mean of all its members. Agglomerative clustering is a method for grouping data by progressively merging similar data samples until an objective function is reached.

In a second stage, which is a hashing or indexing stage, a compact representation of the images is provided. This may also be considered as an image hashing. In particular, the features are extracted from the images and the features are then associated with the words in the vocabulary generated during the training stage using visual similarity criteria. The result is a histogram of visual word occurrence frequency of the given image which represents the image hash. The image hashing during the hashing stage is carried out based on the same visual vocabulary for both the on-board camera images and the images of the database. In other words, only one visual vocabulary may be provided based on which the image hashing of images from the on-board camera and the image hashing of the images from the database is carried out.

In a third stage, which is a visual similarity computation, the calculation of the visual similarity between two images is computed either using a Euclidian distance or a cosine similarity of histograms of their hashes.

According to another embodiment of the invention, a generalized feature descriptor is obtained during a learning process which is based on a plurality of images, e.g. training images.

The generalized feature descriptor may be defined as a so-called visual word of a visual vocabulary. Preferably, a plurality of generalized feature descriptors is obtained during the learning process. The visual vocabulary is created by clustering or grouping a plurality of feature descriptors from a plurality of images. Each visual word in the visual vocabulary represents the generalized feature descriptor which is obtained from grouping multiple similar feature descriptors of image features from training images.

The learning process is identified as the training stage described above. However, the generalized feature descriptors represent the respective sets of generalized image features. The generalized feature descriptors may therefore also be considered as visual words which are obtained during the learning process, e.g. the training stage. In this manner, a visual vocabulary can be obtained during the learning process. This visual vocabulary may then be used for the image hashing of the images stored in the database and the images provided by the on-board camera of the vehicle such that, afterwards, a calculation of the visual similarity between two images based on their image hashes can be carried out.

According to another embodiment of the invention, the second positioning system is configured for allocating the first feature descriptors of the image or a sequence of images stored in the database to the generalized feature descriptor. The second positioning system is further configured for allocating the second feature descriptors of the image or a sequence of images generated by the on-board camera of the vehicle to the generalized feature descriptor.

In particular, the first and/or second feature descriptors are associated with the generalized feature descriptor, e.g. with the visual word, which was obtained during the learning process. This is the basis for providing the first image hash and the second image hash during the hashing stage, e.g. the second stage as described above. The first image hash and the second image hash may then be compared with each other in order to provide the second, visual information which is used to provide a more precise localization of the vehicle.

According to another embodiment of the invention, the second positioning system is configured for determining a similarity between the image stored in the database and the image generated by the on-board camera of the vehicle based on a determined number of first feature descriptors allocated to the generalized feature descriptor and/or based on a determined number of second feature descriptors allocated to the generalized feature descriptor.

This means that the image hash of the image from the database is obtained by calculating the number of first feature descriptors allocated or associated to the generalized feature descriptor. Accordingly, the image hash of the image generated by the on-board camera of the vehicle is obtained by calculating the number of second feature descriptors allocated or associated to the generalized feature descriptor. It should be understood that this procedure may also apply for a plurality of generalized feature descriptors, e.g. visual words.

In this manner, it is possible that a similarity score for the image stored in the database and the image generated by the on-board camera of the vehicle is provided. In particular, the similarity score for the image stored in the database and the image generated by the on-board camera of the vehicle is provided by a comparison between the first image hash and the second image hash.

The similarity score which is a similarity computation may be considered to be the third stage as described above. The processing of the visual data may be conducted on the vehicle and/or on the server unit.

The procedure can in other words be summarized as follows:

An image is generated by the on-board camera of the vehicle and another image is provided by the database. Image features within these image are extracted or selected. Afterwards, corresponding feature descriptors, e.g. the first feature descriptors and the second feature descriptors, are allocated to the image features in the respective images. In another step, these feature descriptors are allocated to the visual words, e.g. the generalized feature descriptors obtained during the learning process. The image hash can then be calculated by determining the number of first feature descriptors and second feature descriptors which have been allocated or associated to each the generalized feature descriptors, e.g. to each of the visual words. The result is a histogram representing the number of feature descriptors being equal to the number of words in the vocabulary.

Generally, using the inventive driver assistance system it is possible to minimize the computational costs and the bandwidth requirements between the vehicle and the server unit. This is because only the image hashes, e.g. the visual feature distributions and frequencies for each image are effectively compared with each other in order to provide the second, visual information.

According to another embodiment of the invention, the second positioning system is configured for determining the similarity between the image stored in the database and the image generated by the on-board camera of the vehicle using a Euclidian distance or a cosine similarity of histograms, wherein the histograms are representative for the number of first feature descriptors and/or second feature descriptors allocated to the generalized feature descriptors, e.g. visual words.

However, other mathematical methods are also possible in order to determine the similarity between the image stored in the database and the image generated by the on-board camera of the vehicle. Once a match between the image stored in the database and the image generated by the on-board camera of the vehicle is found, the second, visual information can be provided. This second, visual information is then combined or fused with the first information about the position of the vehicle which comes from the satellite navigation system such that a precise localization of the vehicle can be achieved.

According to another embodiment of the invention, the determined similarity between the image stored in the database and the image generated by the on-board camera of the vehicle represents the second, visual information about the position of the vehicle which is combined with the first information about the position of the vehicle by the processing unit, e.g. the localization module, in order to determine the position of the vehicle.

In other words, the second, visual information is fused with the first information which is provided by the satellite navigation system in order to determine the exact position of the vehicle. The similarity between the images is determined by means of the similarity score and therefore based on the image hashes representing the frequency of occurrence of the first feature descriptor and the second feature descriptor, respectively.

According to another aspect of the present invention, a method for determining a position of a vehicle is given. In a step of the method, the first information about the position of the vehicle is provided by a first positioning system. In another step, a second, visual information about the position of the vehicle is provided by a second positioning system, wherein the second, visual information about the vehicle is based on a comparison between image data of an image generated by an on-board camera of the vehicle and image data of an image stored in a database. In another step of the method, a determination of the position of the vehicle is conducted by means of a processing unit, wherein the determination of the position of the vehicle is based on the first information about the position of the vehicle and on the second, visual information about the position of the vehicle.

A more detailed description of the method is provided in the following:

At first, the vehicle transmits to the server unit its approximate position, for example based on the first information, e.g. information provided by a satellite navigation system. This information about the approximate position of the vehicle still contains uncertainties with respect to the exact position of the vehicle. Therefore, after a request the server unit downloads from the database, e.g. the street view server, the images contained within an uncertainty area of the vehicle along with information about their corresponding geographical positions.

In a next step, the server generates the corresponding image hashes and transmits them to the vehicle along with the global positions associated with the images. Under typical conditions, the required bandwidth for data transfer is less than 5 kilobits per image.

Afterwards, the vehicle creates hashes from the images acquired by the on-board camera of the vehicle. The images generated by the on-board camera of the vehicle, e.g. the vehicle generated hashes and the hashes provided by the server unit are compared. The result is a visual similarity score between the current on-board camera view and the image candidates within the uncertainty area provided by the server unit.

Finally, similarity scores are sent to the vehicle localization module, for example the processing unit, along with the geographic positions of the image candidates provided by the server unit and the vehicle localization module uses this information possibly fusing it with other localization data to provide a highly improved vehicle position estimation. In other words, the similarity scores are sent to the vehicle localization module and, in this manner, the second, visual information of the second positioning system is provided which is then fused with other localization data, e.g. with first information about the position of the vehicle which comes from satellite navigation systems.

This allows improving the vehicle position estimations especially in urban cluttered areas where precise ego localization is crucial. This is done by means of analyzing the visual information generated by the on-board camera using the above-described visual bag of words technique. This approach has several significant advantages, for example, robustness, computational efficiency and bandwidth efficiency. In particular, the bag of words technique is robust to partial occlusions, changes in the visual aspect of the surroundings, weather variations, lighting differences, etc. The proposed image hashing technique allows for very efficient image similarity computation. In particular, complex visual data is processed and compared in a compact vector form. Moreover, the use of binary features results in even lower computational costs both for processing time and storage. Furthermore, the image hashes generated as described above have a small footprint which is typically less than 5 kilobits per image such that an efficient usage of the communication bandwidth between the vehicle and the server unit is ensured.

These advantages cannot only be used in urban areas but also in highway or motorway scenarios to further increase the precision of the vehicle position estimations.

### Brief description of the drawings

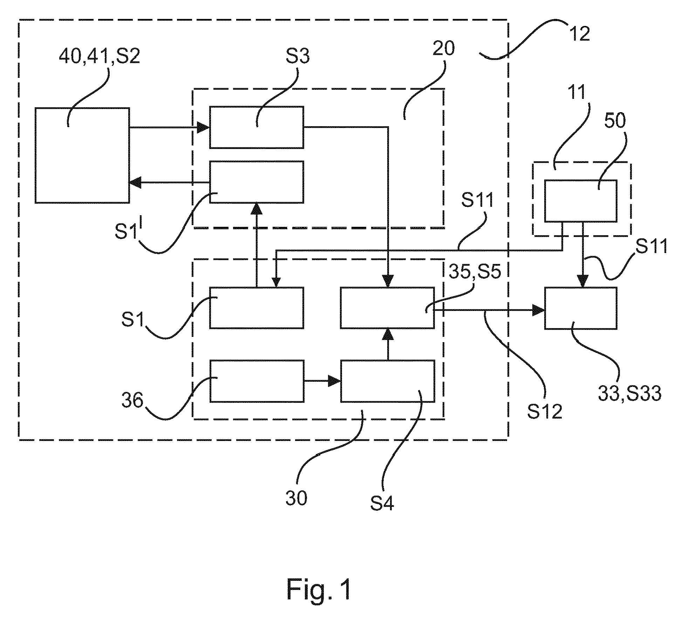

- Fig. 1: shows a flow diagram for a method for determining a position of a vehicle according to an embodiment of the invention.
- Fig. 2: shows a driver assistance system for determining a position of a vehicle according to an embodiment of the invention.
- Fig. 3: shows an image generated by an on-board camera of a vehicle and an image stored in a database according to an embodiment of the invention.

### Detailed description of the drawings

The method for determining the position of the vehicle 30 comprises three main steps. In a first step S11, a first information 50 about the position of the vehicle 30 is provided by a first positioning system 11. In a second step of the method S12, second, visual information 35 about the position of the vehicle 30 is provided by a second positioning system 12, wherein the second, visual information 35 about the position of the vehicle 30 is based on a comparison S5 between image data 36 of an image generated by an on-board camera of the vehicle 30 and image data 41 of an image stored in a database 40. In a third step S33 of the method, the position of the vehicle 30 is determined by a processing unit 33, which may also be the localization module of the vehicle 30, based on the first information 50 about the position of the vehicle 30 and on the second, visual information 35 about the position of the vehicle 30.

Generally, the vehicle 30 provides its position and uncertainty area to the server unit 20 wherein the server unit 20 uses this information to download candidate images from the database 40 which for instance is a street view server. The candidate images from the database 40 are hashed and then sent to the vehicle 30. The vehicle 30 generates hashes from the images generated by its on-board camera or on-board cameras and compares them with the images provided by the server unit 20. The resulting visual similarity scores and the associated candidate positions are fed to the vehicle localization module, e.g. the processing unit 33.

In detail, the vehicle 30 transmits in a step S1 its approximate position to the server unit 20. Approximate position means that uncertainties may be incorporated in the position information provided by the vehicle 30. This information may be the first information 50 about the position of the vehicle 30 provided by the first positioning system 11, e.g. a satellite navigation system. The first positioning system 11 may also be configured for providing an estimation of the position of the vehicle 30. In particular, the first information 50 provided by the first positioning system 11 may be derived from a position estimation of the vehicle 30, for example using dead-reckoning.

In a step S1', a position based query or a request is directed to the database 40. This request refers to the download of images from the database 40, wherein the images to be downloaded represent stored images corresponding to the current location of the vehicle 30 which was provided by the first positioning system 11. The server unit 20 downloads from the database 40 the images contained within the uncertainty area of the vehicle 30 along with their geographical positions. For example, the images of the database 40, e.g. the downloaded image data 41 of the database 40, are based on a street view server like for example Google Street View. The download of the images from the database 40 is conducted in a step S2.

In a step S3, the server unit 20 generates the corresponding image hashes and transmits them to the vehicle 30 along with the global positions associated with the images.

In a step S4, the vehicle 30 generates hashes from the image data 36 of the images generated by the on-board camera of the vehicle 30.

In a step S5, the hashes generated by the vehicle 30 and the hashes generated by the server unit 20 are compared. The result is a visual similarity score between the current on-board camera view and the image candidates within the uncertainty area provided by the server unit 20. In particular, the result of the comparison between the image data 36 of the image generated by the on-board camera of the vehicle 30 and the image data 41 of the image stored in the database 40 results in the second, visual information 35.

This second, visual information 35, e.g. the visual similarity scores, are sent to the vehicle localization module 33 along with the geographical position information of the image candidates provided by the server unit 20. The vehicle localization module 33 uses this information possibly fusing it with other localization data to provide highly improved vehicle position estimations. In particular, in step S12, the visual information 35 about the position of the vehicle 30 is provided by the second positioning system 12 and other position information, for example the first information 50 about the position of the vehicle 30 may be provided by the first positioning system 11 such that the first information 50 and the second, visual information 35 are fused or combined in order to determine the position of the vehicle in a step S33. This means that the first information 50 of the first positioning system 11 may be provided before and/or after the comparison of the images of the database 40 and the images of the on-board camera of the vehicle 30, i.e. the first information 50 of the first positioning system 11 may be provided in step S1 and/or in step S33.

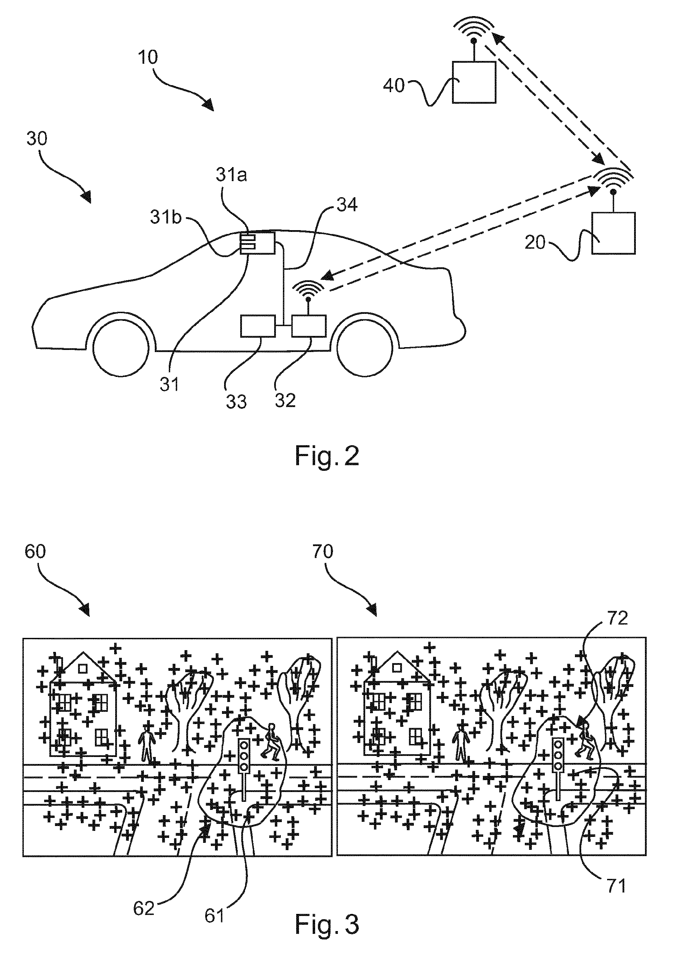

Fig. 2 shows a driver assistance system 10 comprising the vehicle 30, the server unit 20 and the database 40. It is possible that a wireless data transfer between the vehicle 30 and the server unit 20 as well as between the server unit 20 and the database 40 is provided. However, it is also possible that the server unit 20 which generates the image hashes based on the images of the database 40 is located within the vehicle 30. The vehicle 30 comprises the processing unit 33 which is identified as the vehicle localization module in the sense of the present invention. The vehicle localization module 33 may however also be separately located with respect to the vehicle 30. The vehicle 30 further comprises a communication unit 32 which communicates in a wireless manner with the server unit 20 receiving the image hashes from the server unit 20 in order to compare the image hashes from the server unit 20 with image hashes generated by the on-board camera 31 of the vehicle 30. This comparison may be conducted in the vehicle localization module 33, e.g. the processing unit 33.

The on-board camera 31 of the vehicle 30 may be a stereo camera comprising a first camera 31a and a second camera 31b in order to generate images which, after hashing, are sent to the vehicle localization module 33.

Fig. 3 shows an image 60 generated by the on-board camera 31 of the vehicle 30 and an image 70 stored in the database 40. The image 60 generated by the on-board camera 31 represents a scenario within an environment around the vehicle 30. Within the image 60, some of the image features 61 marked with a cross are selected in order to form a second group 62 of image features 61, for example within a certain region of the image 60 as shown in Fig. 3. Similarly, some of the image features 71 also marked with a cross in the image 70 stored in the database 40 are selected to generate a first group 72 of image features 71. The first group 72 is allocated to the first feature descriptors being representative for the first group 72 of image features 71. The frequency of occurrence of the first feature descriptors for the image 70 stored in the database 40 as well as a frequency of occurrence of the second feature descriptors for the image 60 generated by the on-board camera 31 of the vehicle 30 is determined by the second positioning system 12.

Afterwards, a similarity between the image 70 stored in the database 40 and the image 60 generated by the on-board camera 31 of the vehicle 30 is determined based on a comparison between the frequency of occurrence of the first feature descriptor for the image 70 stored in the database 40 and the frequency of occurrence of the second feature descriptor for the image 60 generated by the on-board camera 31 of the vehicle 30.

The frequency of occurrence of the feature descriptors, e.g. the number of allocations of the feature descriptors to the generalized feature descriptor form the visual vocabulary, represents the respective image hashes of the image 60 and the image 70. The similarity score for the image 70 stored in the database 40 and the image 60 generated by the on-board camera 31 of the vehicle 30 is provided to establish the second, visual information 35. In other words, a similarity score is conducted between the first and the second image hash and the first image hash represents the frequency of occurrence of the first feature descriptor of the image 70 stored in the database 40 and the second image hash represents the frequency of occurrence of the second feature descriptor of the image 60 generated by the on-board camera 31 of the vehicle 30.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended clams. In the claims the term "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of protection.

## Claims

1. A driver assistance system (10) for determining a position of a vehicle, comprising:
a processing unit (33);
a first positioning system (11) for providing first information (50) about the position of the vehicle (30);
a second positioning system (12) for providing second, visual information (35) about the position of the vehicle (30) ;
wherein the second positioning system (12) is configured to provide the second, visual information (35) about the position of the vehicle (30) based on a comparison between image data (36) of an image (60) generated by an on-board camera (31) of the vehicle (30) and image data (41) of an image (70) stored in a database (40);
wherein the processing unit (33) is configured for determining the position of the vehicle (30) based on the first information (50) about the position of the vehicle (30) and on the second, visual information (35) about the position of the vehicle (30).

2. The driver assistance system according to claim 1,
wherein the first information (50) about the position of the vehicle (30) is provided by a satellite navigation system and/or based on a position estimation of the vehicle (30) using dead-reckoning.

3. The driver assistance system according to any one of the preceding claims,
wherein the comparison between the image data (36) of the image (60) generated by the on-board camera (31) of the vehicle (30) and the image data (41) of the image (70) stored in the database (40) comprises a comparison between features (61) of the image (60) generated by the on-board camera (31) of the vehicle and corresponding features (71) of the image (70) stored in the database (40).

4. The driver assistance system according to any one of the preceding claims,
wherein the second positioning system (12) is configured for selecting features (71) from the image (70) stored in the database (40) in order to generate a first group (72) of image features (71); and
wherein the second positioning system (12) is configured for selecting features (61) from the image (60) generated by the on-board camera (31) of the vehicle (30) in order to generate a second group (62) of image features (61).

5. The driver assistance system according to claim 4,
wherein the second positioning system (12) is configured for allocating first feature descriptors to the first group (72) of image features (71) using similarity criteria, the first feature descriptors being representative for the first group (72) of image features (71) of the image (70) stored in the database (40); and
wherein the second positioning system (12) is configured for allocating second feature descriptors to the second group (62) of image features (61) using similarity criteria, the second feature descriptors being representative for the second group (62) of image features (61) of the image (60) generated by the on-board camera (31) of the vehicle (30).

6. The driver assistance system according to claim 5,
wherein a generalized feature descriptor is obtained during a learning process which is based on a plurality of images.

7. The driver assistance system according to claim 6,
wherein the second positioning system (12) is configured for allocating the first feature descriptors to the generalized feature descriptor; and/or
wherein the second positioning system (12) is configured for allocating the second feature descriptors to the generalized feature descriptor.

8. The driver assistance system according to claim 7,
wherein the second positioning system (12) is configured for determining a similarity between the image (70) stored in the database (40) and the image (60) generated by the on-board camera (31) of the vehicle (30) based on a determined number of first feature descriptors allocated to the generalized feature descriptor and/or based on a determined number of second feature descriptors allocated to the generalized feature descriptor.

9. The driver assistance system according to claim 8,
wherein the second positioning system (12) is configured for determining the similarity between the image (70) stored in the database (40) and the image (60) generated by the on-board camera (31) of the vehicle (30) using a Euclidean distance or a cosine similarity of histograms.

10. The driver assistance system according to any one of claims 8 or 9,
wherein the determined similarity between the image (70) stored in the database (40) and the image (60) generated by the on-board camera (31) of the vehicle (30) represents the second, visual information (35) about the position of the vehicle (30) which is combined with the first information (50) about the position of the vehicle (30) by the processing unit (33) in order to determine the position of the vehicle (30).

11. A method for determining a position of a vehicle, comprising the steps:
Providing first information (50) about the position of the vehicle (30) by a first positioning system (11, S11);
Providing second, visual information (35) about the position of the vehicle (30) by a second positioning system (12), wherein the second, visual information (35) about the position of the vehicle (30) is provided based on a comparison (S5) between image data (36) of an image (60) generated by an on-board camera (31) of the vehicle (30) and image data (41) of an image (70) stored in a database (40, S12);
Determining the position of the vehicle (30) by a processing unit (33) based on the first information (50) about the position of the vehicle (30) and on the second, visual information (35) about the position of the vehicle (30, S33).
